# EUROPÄISCHE PATENTSCHRIFT

(11) **EP 0 945 407 B1**
(45) Veröffentlichungstag und Bekanntmachung des Hinweises auf die Patenterteilung: **05.06.2002**
(21) Anmeldenummer: 98104671.7
(22) Anmeldetag: 16.03.1998
(51) Int. Cl.: C02F 9/00, C02F 1/52

(54) **Verfahren zur Wasseraufbereitung in getrennten Linien**
Process for water treatment in distinct lines
Procédé de traitement d'eau en lignes distinctes

(43) Veröffentlichungstag der Anmeldung: 29.09.1999
(73) Patentinhaber: VA TECH WABAG Deutschland GmbH & Co. KG, 10707 Berlin (DE)
(72) Erfinder: Schnoor, Gerhard, 29223 Celle (DE)
(74) Vertreter: VA TECH Patente GmbH & Co

(56) Entgegenhaltungen:
- DE-A- 2 802 066
- US-A- 3 728 253
- US-A- 4 388 195
- US-A- 4 790 939

## Beschreibung

Die Erfindung betrifft ein Verfahren zur Wasseraufbereitung zur Herstellung unterschiedlicher Wasserqualitäten in wasserseitig getrennten Linien, wobei in jeder Linie der Kontaktschlamm aus der Sedimentation in die Flockung zurückgeführt, der Überschußschlamm abgeführt und Klarwasser in der vorgegebenen Qualität gewonnen wird.

In der Aufbereitung von Grund- und Oberflächenwässern werden als Primäre Verfahren heute die Flockung und Sedimentation und die Entkarbonisierung angewandt. Flockung und Sedimentation dienen in erster Linie zur Entfernung von abfiltrierbaren Stoffen (AFS) und auch zur Entfernung größerer Mengen an gelösten Fe- und Mn-Verbindungen. Dabei sind folgende Verfahrensschritte üblich:
1. Bei Bedarf Vorbehandlung durch Oxydation oder pH-Wertkorrektur durch Zugabe von Säure oder Lauge.
2. Entstabilisierung unter Zugabe von Flockungsmittel bei erhöhter Turbulenz zwecks Energieeintrag.
3. Flockung unter Zugabe von Flockungshilfsmittel und geringer Tubulenz zur Ausbildung großer, gut sedimentierbarer Flocken.
4. Sedimentierung eventuell in einem Lamellenklärer oder einem Absetzbecken.
5. Rückführung des Kontaktschlammes aus der Sedimentation in die Flockung.

Die Entkarbonisierung dient den gleichen Zielen, ergänzt um eine Ausfällung der temporären Härte durch Zugabe von Kalkmilch. Die Verfahrensschritte sehen folgendermaßen aus:
1. Bei Bedarf Vorbehandlung durch Oxidation.
2. Enthärtung unter Zugabe von Kalkmilch, Kalkwasser oder Natronlauge und Flockungsmitteln, bei erhöhter Turbulenz zwecks Energieeintrag.
3. Flockung unter Zugabe von Flockungshilfsmittel und geringer Tubulenz zur Ausbildung großer, gut sedimentierbarer Flocken.
4. Sedimentierung eventuell in einem Lamellenklärer oder einem Absetzbecken.
5. Rückführung des Kontaktschlammes aus der Sedimentation in die Enthärtung.

Derartige Verfahren mit getrennten Wasser- und Schlammkreisläufen sind bekannt und haben den Nachteil eines großen Platzbedarfes für die benötigten Becken. Durch die unterschiedlichen Auslegungswerte müssen die Sedimentationsbecken differente Abmessungen aufweisen, woraus eine Erhöhung der Kosten resultiert.

Die Erfindung hat es sich zur Aufgabe gemacht den aufgezeigten Mißständen zu begegnen und die Flexibilität in der Mengenaufteilung der einzelnen Klarwassermengen durch weitestgehende Verfahrensidentität der einzelnen Linien zu gewährleisten.

Die Erfindung ist dadurch gekennzeichnet, daß der Überschußschlamm (10) aus der Linie (2) für das entkarbonisierte, insbesondere enthärtete Wasser zur Verbesserung der Sedimentation in der Linie (1) für das nur ausgeflockte Wasser zugeführt wird. Wesentliche Merkmale sind in den Unteransprüchen angeführt. Ein Vorteil unserer Erfindung besteht darin, daß im wesenlichen nur mehr eine Überschußschlammqualität anfällt, deren Behandlung dadurch vereinfacht wird.

Die Erfindung ist in der angeschlossenen Figur beispielsweise und schematisch dargestellt und wird anhand einer Wasseraufbereitungsanlage mit zwei parallelen Linien erklärt. Im Rahmen der Erfindung ist die beliebige Erhöhung der Anzahl der einzelnen Linien möglich und ist auch während des Betriebes das Zahlenverhältnis der einzelnen Linien untereinander entsprechend der benötigten Wassermengen variierbar.

Bei der Wasseraufbereitung steigt das Kostenbewußtsein, sodaß selbst im Haushalt schon heute oft zwischen Trink- und Nutzwasser unterschieden wird. Auch im industriellen Bereich wird zwischen enthärtetem Prozeßwasser und einfach sauberen Wasser, beispielsweise für Abgaswaschanlagen, bei welchen die Härte weniger wichtig ist, unterschieden.

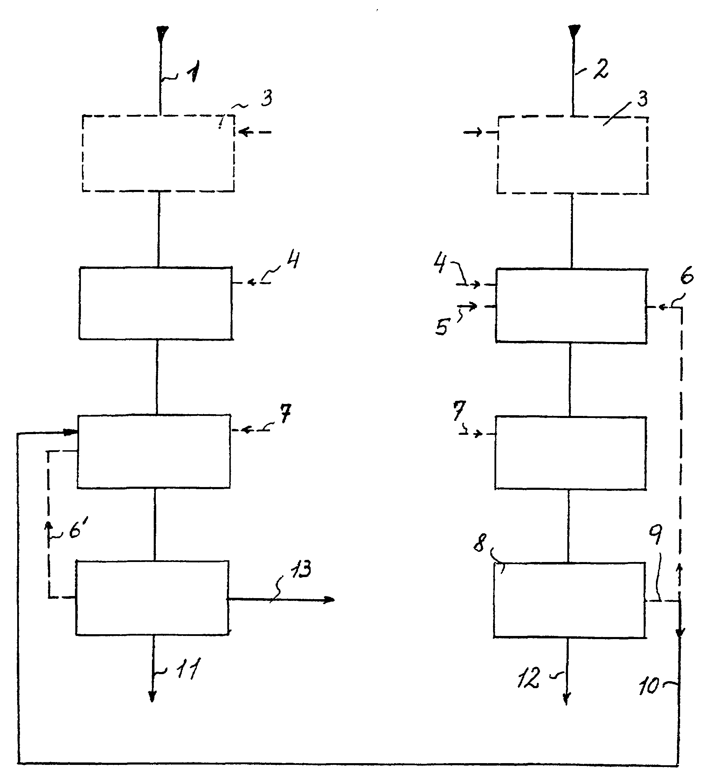

In einem Wasseraufbereitungswerk wird das Rohwasser in mehreren parallel angeordneten Straßen gereinigt, wobei, wie in der Figur dargestellt, in der Linie 1 nur ausgeflockt und in der Linie 2 auch entkarbonisiert wird. Zu diesem Zweck wird dem eventuell in der Belüftungsstufe 3 vorbehandelten Rohwasser, in der Linie 2, eventuell zusätzlich zum Flockungsmittel 4, Kalkmilch 5 und Rücklaufschlamm 6 zur Entstabilisierung zugeführt. Nach dem Zuführen des Flockungshilfsmittels 7 flocken die Verunreinigungen aus und werden im Sedimentationsbecken 8 abgeschieden. Der abgeschiedene Schlamm 9 wird teilweise als Rücklaufschlamm 6 rückgeführt und zum anderen Teil 10 gemäß dem Stand der Technik einer nicht dargestellten Schlammbehandlung oder Deponie zugeführt. Dieser Schlamm 9 aus der Entkarbonisierung ist infolge seines Kalkgehaltes gut sedimentierbar und wird erfindungsgemäß in einer anderen Linie 1 eventuell mit zusätzlichen Flockungsmittel 7 zusammen mit dem Rücklaufschlamm 6' aus der Sedimentierung 8 als Beschwerungsmittel zur Flockung des entstabilisierten Rohwassers nach Zugabe des Flockungsmittels 4 beigemischt. Nach diesem Verfahrensschritt verbessert sich die Sedimentationseigenschaft, sodaß bei gleicher Klarwasserqualität das Volumen des Sedimentationsbeckens um etwa 30 % verringert werden kann.

Auf diese Weise wird in den einzelnen Linien 1 und 2 Klarwasser 11, bzw. 12 mit unterschiedlichen Wasserqualitäten hergestellt, wobei das Klarwasser 12 auch enthärtet ist und das Klarwasser 11 mit geringeren Sedimentationskosten belastet ist.

Versuche im Labormaßstab haben diese Angaben bestätigt, wobei in günstigen Fällen sogar die gleich hohe Absetzgeschwindigkeit wie bei der Entkarbonisierung erreicht wird. Die Versuchsergebnisse sind in nachstehender Tabelle angegeben:

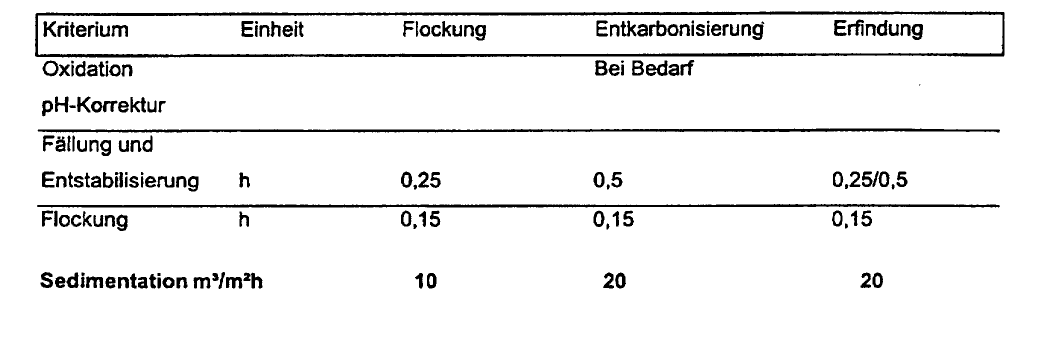

## Patentansprüche

1. Verfahren zur Wasseraufbereitung zur Herstellung unterschiedlicher Wasserqualitäten in wasserseitig getrennten Linien, wobei in jeder Linie der Kontaktschlamm aus der Sedimentation in die Flockung zurückgeführt, der Überschußschlamm abgeführt und das Klarwasser in der vorgegebenen Qualität gewonnen wird, **dadurch gekennzeichnet, daß** der Überschußschlamm (10) aus der Linie (2) für das entkarbonisierte, insbesondere enthärtete Wasser zur Verbesserung der Sedimentation in der Linie (1) für das nur geflockte Wasser zugeführt wird.

2. Verfahren nach Anspruch 1, **dadurch gekennzeichnet, daß** der Überschußschlamm (10) zusammen mit einem Flockungshilfsmittel in die Linie (1) für das nur geflockte Wasser eingebracht wird.

3. Verfahren nach Anspruch 1 oder 2, **dadurch gekennzeichnet, daß** der Überschußschlamm (10) aus der Linie (2) zusammen mit dem Rückführungsschlamm (6') der Linie (1) der Linie (1) zur Flokkung zugeführt wird.

## Claims

1. A method for water treatment for the preparation of different water qualities in lines separated at the water end, in each line the contact sludge from sedimentation being returned to flocculation, the excess sludge being removed and the clean water being obtained in the predetermined quality, **characterised in that** the excess sludge (10) from line (2) for the decarbonized, particularly softened water is fed to line (1) for the water which has only been flocculated to improve the sedimentation in line (1).

2. The method according to Claim 1, **characterised in that** the excess sludge (10) along with a flocculation aid is fed into line (1) for the water which has only been flocculated.

3. The method according to Claim 1 or 2, **characterised in that** the excess sludge (10) from line (2) along with the return sludge (6') of line (1) is fed to line (1) for flocculation.

## Revendications

1. Procédé de traitement de l'eau pour produire des qualités d'eau différentes dans des lignes, séparées côté eau, dans chaque ligne la boue de contact, issue de sédimentation, étant recyclée à la floculation, la boue en excès étant évacuée et l'eau claire étant obtenue à la qualité prédéterminée, **caractérisé en ce que** la boue en excès (10) issue de la ligne (2) concernant l'eau décarbonatée, en particulier adoucie, est amenée, pour amélioration de la sédimentation, à la ligne (1) prévue pour l'eau ayant uniquement été floculée.

2. Procédé selon la revendication 1, **caractérisé en ce que** la boue en excès (10), conjointement avec un produit auxiliaire de floculation, est introduite dans la ligne (1) prévue pour l'eau ayant uniquement été floculée.

3. Procédé selon la revendication 1 ou 2, **caractérisé en ce que** la boue en excès (10) extraite de la ligne (2), conjointement avec la boue de recyclage (6') de la ligne (1), est amenée à la ligne (1) menant à la floculation.
